# EUROPEAN PATENT APPLICATION

(11) **EP 1 376 324 A2**
(43) Date of publication of application: **02.01.2004**
(21) Application number: 03010180.2
(22) Date of filing: 06.05.2003
(51) Int. Cl.: G06F 3/033

(54) **Information processing apparatus and character input assisting method for use in the same**

(30) Priority: 28.06.2002 JP 2002189943
(71) Applicant: Kabushiki Kaisha Toshiba, Tokyo (JP)
(72) Inventor: Tomizawa, Hideki, c/o K. K. Toshiba, Int. Prop. Di, Tokyo 105-8001 (JP); Ohashi, Shikyo, c/o K. K. Toshiba, Int. Prop. Di, Tokyo 105-8001 (JP)
(74) Representative: Henkel, Feiler, Hänzel

(57) **Abstract**

An information processing apparatus comprises a touch screen unit (12), a unit for displaying on the touch screen unit (12) a character input window (203) to input a character in accordance with an operation of a stylus, and a unit for displaying, on the character input window (203), information relating to an active window associated with a current character input operation, the active window being one of a plurality of windows displayable on the touch screen (12).

## Description

The present invention relates generally to an information processing apparatus and a character input assisting method for use in the information processing apparatus. More particularly, this invention relates to an information processing apparatus with a touch screen and a character input assisting method for use in this apparatus.

In these years, various types of portable information processing apparatuses, such as PDAs (Personal Digital Assistants), have been developed. In the portable information processing apparatuses, touch screens are used as input devices.

The touch screen is a display unit comprising a flat panel display and a tablet. The touch screen is designed to recognize the location of a touch on its screen surface.

In the information processing apparatus with the touch screen, the touch screen displays a character input window that is used to input characters in accordance with the operation of a stylus. The user operates the stylus on the character input window, thereby performing a character input operation.

In most of the PDAs with touch screens, only one window can be displayed at a time because of restrictions on the display screen size of the touch screen. In this case, the currently displayed window serves as an active window on which a character input operation is performed.

To input characters to the displayed window, the user, for examples, touches a software keyboard on the character input window by means of a stylus, or handwrites characters on the character input window by operating the stylus. This requires the user to perform the character input operation while viewing the character input window itself.

Recently, there is a demand for an increase in display screen size of the touch screen. The increase in display screen size makes it possible to simultaneously display windows associated with a plurality of application programs on the touch screen, without sacrificing visibility of each window.

However, displaying a plurality of windows on the same screen at the same time may rather disadvantageously lead to a deterioration in operational efficiency for character input. The reason is that the user has to perform a character input operation while successively confirming, by a focus position or a cursor position, which of displayed windows is currently related to the character input operation, and, moreover, viewing the character input window itself.

The object of the present invention is to provide an information processing apparatus and a character input assisting method, which can improve the operational efficiency for character input using a character input window.

According to an embodiment of the present invention, there is provided an information processing apparatus comprising: a touch screen unit; means for displaying on the touch screen unit a character input window to input a character in accordance with an operation of a stylus; and means for displaying, on the character input window, information relating to an active window associated with a current character input operation, the active window being one of a plurality of windows displayable on the touch screen.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows an external appearance of a computer according to an embodiment of the present invention;
FIG. 2 is a block diagram showing a system configuration of the computer according to the embodiment;
FIG. 3 is a view for describing a character input window displayed on a touch screen of the computer of the embodiment;
FIG. 4 is a view for describing the character input window displayed on the touch screen of the computer of the embodiment;
FIG. 5 is a block diagram illustrating a configuration of character input software used in the computer of the embodiment;
FIG. 6 is a flow chart illustrating an example of a process that is executed by character input software, which is used in the computer of the embodiment, to display current application information; and
FIG. 7 shows another example of the character input window displayed on the touch screen of the computer of the embodiment.

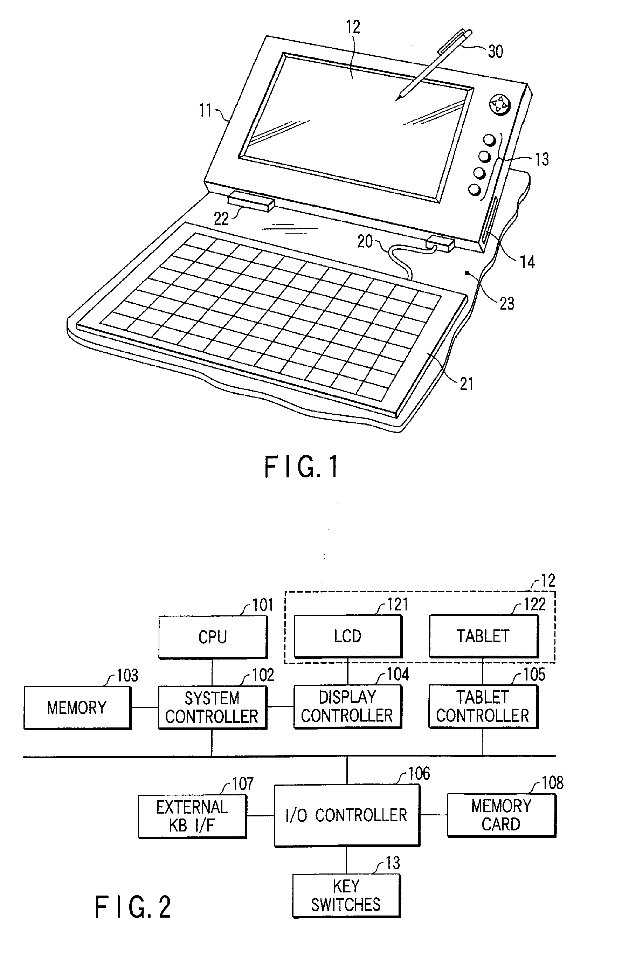

Embodiments of the present invention will now be described with reference to the accompanying drawings. Referring to FIGS. 1 and 2, the structure of an information processing apparatus according to an embodiment of the invention will be described.

FIG. 1 shows an external appearance of the information processing apparatus. The information processing apparatus is a portable computer such as a handheld computer or a PDA. The portable computer, as shown in FIG. 1, comprises a computer main body 11 and an external keyboard 21.

The computer main body 11 is a so-called tablet computer capable of inputting by means of a stylus. The computer main body 11 is operable independently as a tablet computer or a PDA. A touch screen unit 12, and a key switch group 13 are provided on a top surface of the computer main body 11.

The touch screen unit 12 is a display device designed to recognize the location of a touch on its display surface. The touch screen unit 12 is realized by a flat panel display such as an LCD and a tablet disposed on a display screen of the flat panel display.

The touch screen 12 displays a plurality of windows corresponding to a plurality of application programs that are running in the computer. The user touches the surface of the touch screen 12 by means of a stylus 30, thereby performing such operations as moving a cursor, selecting an object and moving a focus.

The touch screen 12 also displays a character input window. The character input window is a dedicated window for use in inputting characters in accordance with the operation of the stylus 30. The character input window serves as a graphical user interface (GUI) for a character input operation. The character input window displays a software keyboard or a character input area for handwriting. The user touches a software keyboard displayed on the character input window by means of the stylus 30, or handwrites characters on a character input area displayed on the character input window by operating the stylus 30. Thereby, the user can input characters.

The key switch group 13 includes operation keys such as a cursor moving key, an Enter key, and a program activation key. A card slot 14 for detachably accepting a memory card or an I/O card is provided on a side face of the computer main body 11.

The external keyboard 21 is an optional input device that can be connected to the computer main body 11, as desired. The external keyboard 21 is connected to the computer main body 11 over a cable 20.

The computer main body 11 and external keyboard 21 can be contained together in a book-cover-like case 23 made of cloth or leather. A hook 22 for supporting the computer main body 11 at a predetermined angle is attached to the case 23.

FIG. 2 shows an embodiment of system configuration of the computer. The computer, as shown in FIG. 2, comprises a CPU 101, a system controller 102, a memory 103, a display controller 104, a tablet controller 105, and an I/O controller 106.

The CPU 101 is a processor provided for controlling the operation of the computer. The CPU 101 executes an operating system (OS) and various application/utility programs. The operating system (OS) has a multi-window function capable of displaying a plurality of windows at the same time.

The memory 103 comprises a non-volatile memory storing the operating system (OS) and various application/utility programs, and a RAM used as a main memory. The non-volatile memory also stores character input software.

The character input software is a program for controlling a character input operation using the touch screen unit 12. The character input software causes the display screen of the touch screen unit 12 to display a character input window. Characters input by the character input operation through the character input window are delivered to a currently active window, on which characters are to be input, under control of the operating system (OS).

The active window, in this context, means a currently focused window, that is, a window on which cursor movement or character input is effected, which is chosen from windows corresponding to currently running application programs. That is, the active window is a target window on which character is to be input through the character input window.

In order to enhance the efficiency of the character input operation using the character input window, the character input software has a function of displaying, on the character input window, information relating to the active window, for which the character input operation is performed, as current application information. The current application information displayed on the character input window is dynamically altered in response to switching of the active window.

The display controller 104 controls an LCD 121, and the tablet controller 105 controls a tablet 122. The tablet 122 comprises a transparent coordinate detection device. The touch screen 12 comprises the LCD 121 and tablet 122 disposed on the display screen of the LCD 121.

The I/O controller 106 controls the external keyboard 21 connected via an external keyboard interface (external KB I/F) 107, and detects depression of the key switch group 13. Further, the I/O controller 106 controls a memory card 108 inserted in the card slot 14.

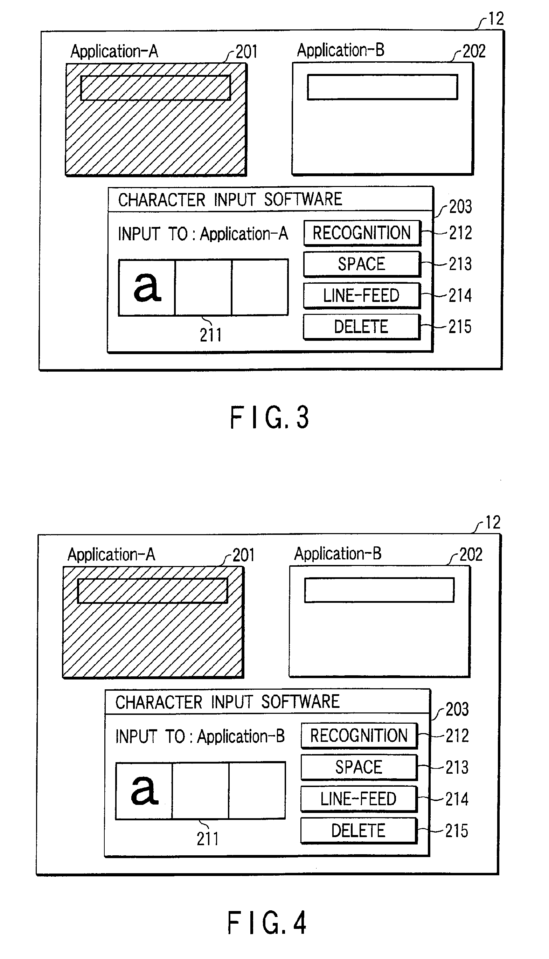

FIG. 3 shows an example of the character input window displayed on the touch screen 12.

Assume that two windows 201 and 202 corresponding to first and second application programs (Application-A, Application-B) are displayed on the display screen of the touch screen 12. Each of the windows 201 and 202 has a character input field.

The display screen of the touch screen 12 also displays a character input window 203 provided by the character input software.

The character input window 203 includes three character input areas 211 used for handwrite character input. In addition, the character input window 203 includes a "RECOGNITION" button 212, a "SPACE" button 213, a "LINE-FEED" button 214 and a "DELETE" button 215 as operation buttons relating to character input. When the "RECOGNITION" button 212 is tapped by the stylus 30, the character input software executes a character recognition process for recognizing a character handwritten in the character input area 211. A character code obtained by the character recognition process is sent to an application program with the currently active window through the operating system (OS), and input to the character input field on the window.

For example, now, the window 201 corresponding to the first application program (Application-A) is the active window associated with the character input operation. In this case, the character input window 203 displays the program name (Application-A) of the first application program as current application information for identifying the application associated with the character input operation. The recognition result of the character handwritten in the character input area 211 by the stylus 30 is delivered from the character input software to the first application program (Application-A) via the operating system.

The active window is switched to a window of another application program, for example, when another new application program is activated or the window of another application program is tapped by the stylus 30. Responding to the switching of the active window, the current application information displayed on the character input window 203 is dynamically altered.

FIG. 4 shows a case where the active window has been switched from the window 201 corresponding to the first application program (Application-A) to the window 202 corresponding to the second application program (Application-B). In this case, the character input window 203 displays the program name (Application-B) of the second application program as current application information indicative of the application associated with the character input operation.

As has been described above, according to the computer of this embodiment, the character input window 203 displays the information relating to the active application window associated with the current character input operation. This active application window is one of a plurality of windows (hereinafter referred to as "application windows") corresponding to a plurality of application programs, which can be displayed on the touch screen 12. Thereby, the user can understand which application window is associated with the character input operation, merely by viewing the character input window 203. Thus, the operational efficiency for character input using the character input window 203 can be enhanced.

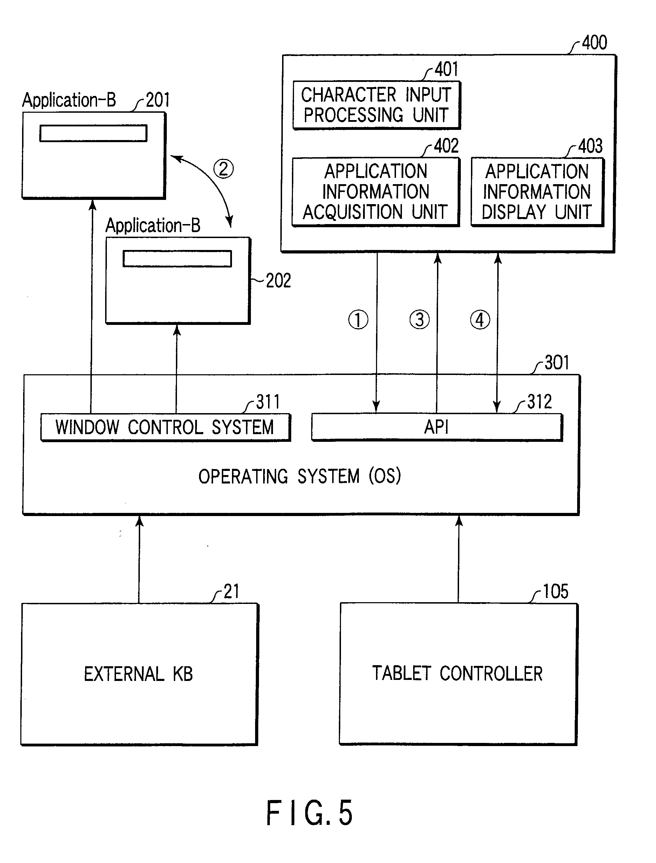

Referring now to FIG. 5, a description will be given of the functional structure of the character input software and the configuration for displaying the current application information on the character input window 203.

A window control system 311 of the operating system (OS) 301 provides a graphics user interface. In accordance with a key input from the external keyboard 21 or position information indicative of the location of tapping, which is sent from the tablet controller 105, the window control system 311 controls focusing, resizing, movement, etc. in connection with the application window 201, 202. The operating system (OS) 301 is also provided with an API (Application Program Interface) 312 relating to a window control.

Character input software 400 for displaying the character input window 203 acquires from the operating system (OS) 301 current application information relating to the currently active application window, using the API 312 in the OS 301. The acquired current application information is displayed on the character input window 203.

The character input software 400, as shown in FIG. 5, includes a character input processing unit 401, an application information acquisition unit 402 and an application information display unit 403.

The character input processing unit 401 executes a process for displaying the character input window 203 on the display screen of the touch screen 12, and a process for performing character input in accordance with the operation of the stylus 30 that is performed on the character input window 203.

The application information acquisition unit 402 detects the active application window associated with the current character input operation, and acquires from the operating system 301 current application information relating to the active application window. The application information display unit 403 displays on the character input window 203 the current application information acquired by the application information acquisition unit 402.

How the character input software 400 dynamically acquires the current application information from the operating system 301 via the API 312 will now be described.
(1) The character input software 400 asks the operating system 301 to issue a notice to the character input software 400 when the focus state has changed (focus monitor request). Specifically, the focus monitor request is to ask the operating system 301 to issue a notice to the character input software 400 when a change has occurred in the focus state, that is, when a switching of the active application window has occurred.
(2) The change in the focus state occurs, for example, when the user taps the application window by means of the stylus 30, or a new application program is activated.
(3) The operating system 301 monitors a change in the focus state. If the focus state has changed, the operating system 301 sends a message indicative of the change to the requesting character input software 400.
(4) Upon receiving the message from the operating system 301, the character input software 400 acquires from the operating system 301 current application information (application name, etc.) relating to the application window that is currently focused, and displays the acquired information on the character input window 203.

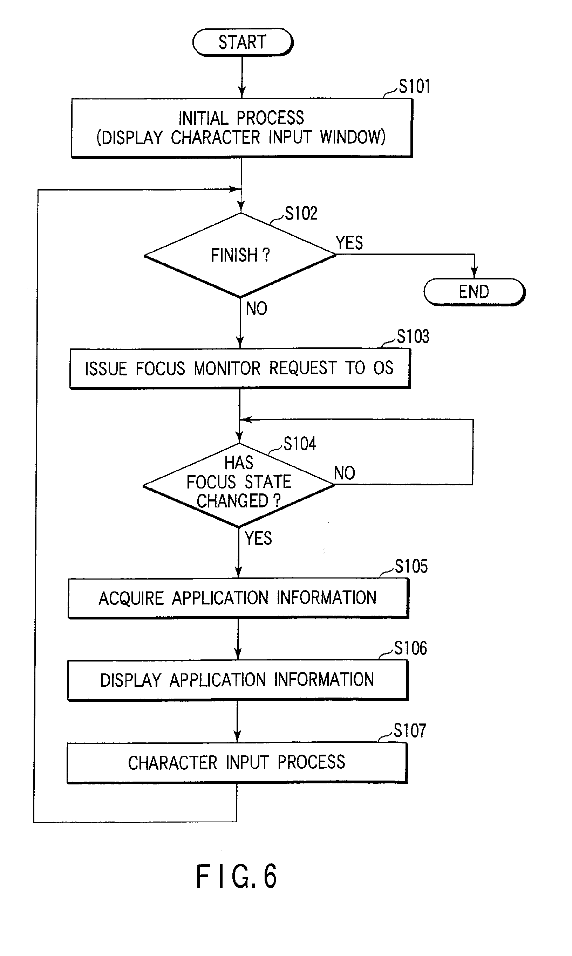

With reference to a flow chart of FIG. 6, a description will now be given of an example of a process that is executed by the character input software 400 to display the current application information.

The character input software 400 is a program that is first activated following a bootstrap process of the operating system 301. The character input software 400 executes its initial process (step S101). The initial process includes, e.g. a process for displaying the character input window 203 on the display screen of the touch screen 12. Normally, at this time point, the application program is yet to be executed, so the character input window 203 does not display current application information.

If the user explicitly instructs finish of the character input software 400 that has completed its initial process (YES in step S102), the character input software 400 executes a finish process. Unless the user explicitly instructs finish, the character input software 400 remains in the on-state.

Following the completion of the initial process, the character input software 400 issues a focus monitor request to the operating system 301, thus requesting that a notice be issued to the character input software 400 when the focus state has changed (step S103). Based on the presence/absence of a notice message from the operating system 301, the character input software 400 determines whether a change in the focus state has occurred, that is, whether the application window associated with the character input operation has been switched (step S104). Switching of the application window associated with the character input operation occurs when a new application program is activated or when a window, other than the currently active application window, is tapped.

Upon receiving the message indicative of the change in the focus state from the operating system 301 (YES in step S104), the character input software 400 acquires information (e.g. application name) relating to the currently focused active application window from the operating system 301 (step S105). The character input software 400 displays the acquired information on the character input window 203 as the current application information (step S106).

For example, if an application program is activated following the activation of the character input software 400, the character input window 203 displays the program name, etc. of the application program as current application information.

If the user handwrites a character on the character input window 203 by operating the stylus 30, the character is delivered to the currently focused active application program via the character input software 400 and operating system 301 (step S107).

If an application program is already activated when the character input software 400 is activated, current application information relating to the application program is acquired from the operating system 301 in the initial process in step S101 and the acquired information is displayed on the character input window 203.

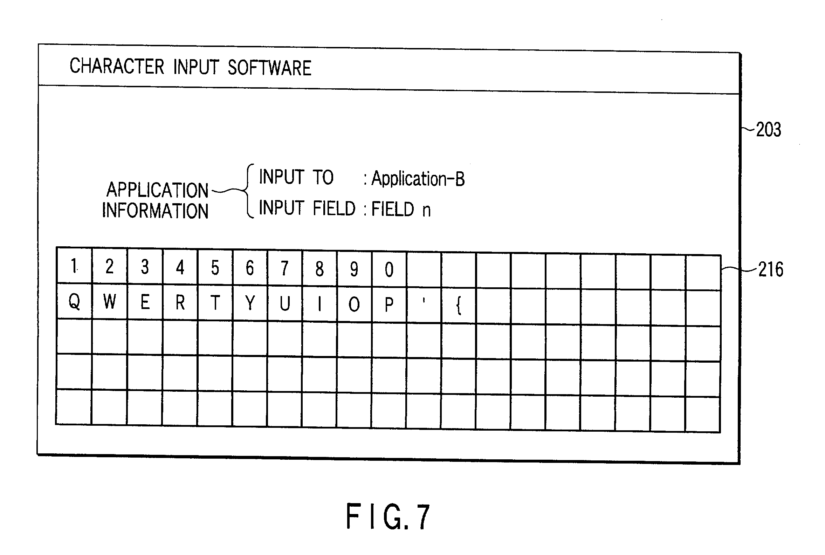

FIG. 7 shows a second example of the character input window 203. In the second example, a software keyboard 216, in lieu of the character input area 211 for handwrite, is displayed on the character input window 203.

In addition, the program name of the active application window and the input field name for character input are displayed as current application information. For example, in the case where an input form is displayed on a window that is provided by an application program such as a Web browser, the name or number of the field associated with the current character input operation on the input form is displayed. Of course, other various information of the active application, if it is acquirable, may be displayed in addition to the program name and input field name.

As has been described above, according to the present embodiment, the character input window 203 displayed on the touch screen 12 for the character input operation using the stylus 30 presents the information for identifying the application window associated with the character input operation. Thus, the user can understand which application window is associated with the character input operation, merely by viewing the character input window 203. Therefore, the operational efficiency for character input using the character input window 203 can be enhanced.

The character input software 400 may be stored in a computer-readable storage medium. In this case, the same advantages as with the present embodiment can easily be obtained merely by loading the character input software 400 in an ordinary computer with a touch screen via the storage medium and executing the character input software 400.

## Claims

1. An information processing apparatus **characterized by** comprising:
a touch screen unit (12);
means (400, S101) for displaying on the touch screen unit (12) a character input window (203) to input a character in accordance with an operation of a stylus (30); and
means (400, S106) for displaying, on the character input window (203), information relating to an active window associated with a current character input operation, the active window being one of a plurality of windows displayable on the touch screen (12).

2. The information processing apparatus according to claim 1, **characterized in that** the means (400, S106) for displaying the information relating to the active window includes means for displaying on the character input window (203) a program name of an application program corresponding to the active window.

3. The information processing apparatus according to claim 1, **characterized in that** the means (400, S106) for displaying the information relating to the active window includes:
means (S104) for determining whether a switching of the active window is occurred; and
means (S105) for acquiring, when the occurrence of the switching of the active window is determined, information relating to a window newly set in an active state.

4. The information processing apparatus according to claim 3, **characterized in that** the means (S105) for acquiring the information relating to the window newly set in the active state includes means for acquiring information of the window newly set in the active state from an operating system (301) of the information processing apparatus.

5. The information processing apparatus according to claim 3, **characterized in that** the determining means (S104) includes means for determining issuance/non-issuance of a notice on the occurrence of the switching of the active window from the operating system (301) of the information processing apparatus.

6. The information processing apparatus according to claim 1, **characterized in that** the means (400, S106) for displaying the information relating to the active window includes:
means (S105) for acquiring information relating to a currently active window from the operating system (301) in response to a notice from the operating system (301) of the information processing apparatus, the notice indicating occurrence of switching of the active window; and
means (S106) for displaying the acquired information relating to the currently active window on the character input window (203).

7. A method for assisting character input, for use in an information processing apparatus capable of displaying a plurality of windows on a touch screen (12), **characterized by** comprising:
displaying (400, S101) on the touch screen (12) a character input window (203) to input a character in accordance with an operation of a stylus (30); and
displaying (400, S106), on the character input window (203), information relating to an active window associated with a current character input operation, the active window being one of a plurality of windows displayable on the touch screen (12).

8. The method according to claim 7, **characterized in that** the displaying (400, S106) of the information relating to the active window includes displaying on the character input window (203) a program name of an application program corresponding to the active window.

9. The method according to claim 7, **characterized in that** the displaying (400, S106) of the information relating to the active window includes:
determining (S104) whether a switching of the active window is occurred; and
acquiring (S105), when the occurrence of the switching of the active window is determined, information relating to a window newly set in an active state.

10. The method according to claim 9, **characterized in that** the acquiring (S105) of the information relating to the window newly set in the active state includes acquiring information of the window newly set in the active state from an operating system (301) of the information processing apparatus.

11. The method according to claim 9, **characterized in that** the determining (S104) includes determining issuance/non-issuance of a notice on the occurrence of the switching of the active window from the operating system (301) of the information processing apparatus.

12. The method according to claim 7, **characterized in that** the displaying (400, S106) of the information relating to the active window includes:
acquiring (S105) information relating to a currently active window from the operating system (301) in response to a notice from the operating system (301) of the information processing apparatus, the notice indicating occurrence of switching of the active window; and
displaying (S106) the acquired information relating to the currently active window on the character input window (203).
